# FASCICULE DE BREVET EUROPEEN

(11) **EP 2 861 412 B1**
(45) Date de publication et mention de la délivrance du brevet: **28.07.2021**
(21) Numéro de dépôt: 13737316.3
(22) Date de dépôt: 14.06.2013
(51) Int. Cl.: B29C 70/52, B29C 70/20, B29C 53/12, F16F 1/366

(54) **PROCEDE POUR OBTENIR UN CORPS D'UNE FORME DONNEE A PARTIR D'UN FIL OU ANALOGUE**
VERFAHREN ZUR HERSTELLUNG EINES KÖRPERS MIT EINER BESTIMMTEN FORM AUS EINEM DRAHT ODER DERGLEICHEN
METHOD FOR OBTAINING A BODY HAVING A GIVEN SHAPE FROM A WIRE OR THE LIKE

(30) Priorité: 14.06.2012 FR 1201696
(43) Date de publication de la demande: 22.04.2015
(73) Titulaire: S.ARA Composite, 92210 Saint-Cloud (FR)
(72) Inventeur: SARDOU, Max, F-77165 Saint-Soupplets (FR); SARDOU, Patricia, F-77165 Saint-Soupplets (FR)
(74) Mandataire: Cabinet Beau de Loménie
(86) Numéro de dépôt international: PCT/FR2013/051396
(87) Numéro de publication internationale: WO 2013/186501

(56) Documents cités:
- EP-A1- 0 684 216
- EP-A2- 0 257 847
- WO-A1-02/099307
- US-A- 3 946 097
- US-A- 4 720 368
- Robert Rainer Pittroff: "RELATIONSHIP BETWEEN THE PHYSICAL PROPERTIES AND CURING SYSTEM OF AN EPOXY MATRIX MATERIAL", , 1 December 2007 (2007-12-01), XP055663200, Retrieved from the Internet: URL:http://citeseerx.ist.psu.edu/viewdoc/d ownload?doi=10.1.1.604.9299&rep=rep1&type= pdf [retrieved on 2020-01-28]

## Description

La présente invention concerne les procédés pour obtenir un corps d'une forme donnée à partir d'un fil ou analogue, comme une structure complexe de préférence élancée, moulée, pultrudée ou extrudée constituée par exemple de fibres de verre, de métaux, de composites thermodurcissables ou thermoplastiques, etc., ou de toute combinaison de ces matériaux.

Ces structures composites complexes moulées ou extrudées peuvent être des composants structuraux d'avions, de bateaux, de véhicules terrestres, industriels ou de loisirs, c'est-à-dire utiles dans toutes applications : l'astronautique, l'aéronautique, la marine, les transports, l'industrie, le domaine éolien, les loisirs. Elles peuvent aussi être utiles pour la réalisation de ressorts hélicoïdaux ou pseudo-hélicoïdaux pour, notamment, les suspensions de véhicules automobiles.

Pour réaliser certains corps comme des structures composites complexes moulées ou extrudees, on connaît des procédés de moulage pour lesquels sont utilisés des moules intégrant des tiroirs et autres éléments très complexes, afin de permettre le démoulage de ces structures. Ces procédés donnent de bons résultats, mais sont très coûteux et, en outre, ne permettent pas de produire en grande quantité des corps qui se révèlent non démoulables comme, par exemple, des ressorts de suspension de véhicules automobiles.

La publication US 3,946,097 divulgue un procédé de formation en continu de produit en matière plastique armée comprenant l'imprégnation par une résine thermodurcissable crue d'une matière fibreuse de renforcement amenée en continu, le formage de la matière fibreuse imprégnée de résine à une configuration de section prédéterminée, et l'extrusion forcée d'une matière thermoplastique fondue sous pression de manière à la mettre en contact avec la matière fibreuse mise en forme et à en recouvrir celle-ci.

Il existe aussi un autre procédé dit "à noyau perdu". Ce procédé consiste tout d'abord à mouler ou usiner un noyau avec des empreintes en creux définissant la forme du corps à obtenir, puis à placer ce noyau dans la cavité d'un moule et, après avoir refermé le moule, à injecter un matériau composite dans l'espace ménagé entre le moule et le noyau. Après rigidification du corps moulé sur le noyau, l'ensemble est sorti du moule, puis le procédé consiste à faire fondre le noyau, ce qui permet de libérer le corps ainsi formé. Dans ce but, le noyau est généralement réalisé en un matériau eutectique qui fond à des températures raisonnables compatibles avec les besoins de la mise en œuvre du procédé.

Ce dernier procédé présente lui aussi des inconvénients, notamment un coût d'outillage et de mise en œuvre important.

Aussi, la présente invention a-t-elle pour but de mettre en œuvre un procédé pour obtenir un corps devant avoir une forme donnée à partir d'un fil ou analogue, qui pallie en grande partie les inconvénients des procédés similaires de l'art antérieur décrits sommairement ci-dessus.

Plus précisément, la présente invention a pour objet un procédé pour obtenir un corps d'une forme donnée à partir d'un fil ou analogue selon la revendication 1.

D'autres caractéristiques et avantages de la présente invention apparaîtront au cours de la description suivante donnée en regard des dessins annexés à titre illustratif mais nullement limitatif, dans lesquels :

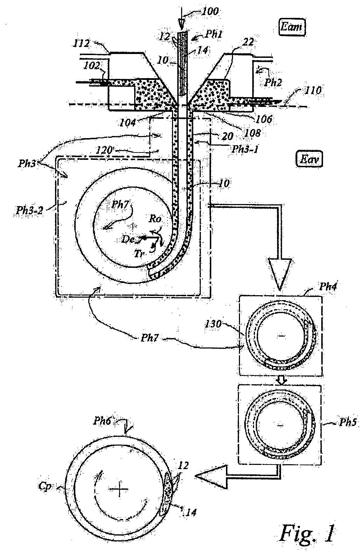

La figure 1 est un schéma bloc illustrant les différentes phases de mise en œuvre du procédé selon l'invention pour obtenir un corps devant avoir une forme donnée à partir d'un fil ou analogue, ce corps étant, dans le cas d'application illustré, un ressort en hélice, et

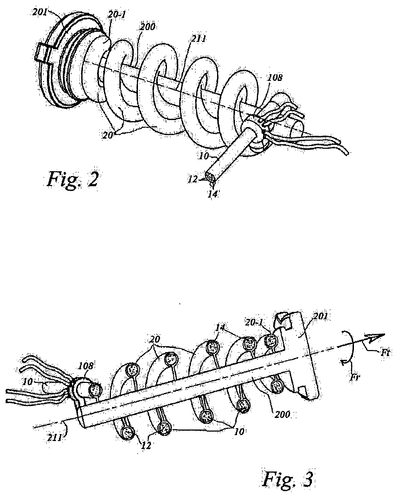

Les figures 2 et 3 représentent un moyen de mise en œuvre du procédé selon l'invention pour obtenir un corps de forme donnée à partir d'un fil ou analogue, ce corps étant, dans l'exemple illustré, un ressort en hélice ou pseudo-hélice comme sur la figure 1, la figure 2 étant une vue en perspective et la figure 3 une vue en coupe longitudinale en perspective.

Il est tout d'abord précisé que, sur les figures, les mêmes références désignent les mêmes éléments, quelle que soit la figure sur laquelle elles apparaissent et quelle que soit la forme de représentation de ces éléments. De même, si des éléments ne sont pas spécifiquement référencés sur l'une des figures, leurs références peuvent être aisément retrouvées en se reportant à une autre figure.

Il est aussi précisé que les figures représentent essentiellement un seul mode de mise en œuvre de l'objet selon l'invention, mais qu'il peut exister d'autres modes de mise en œuvre qui répondent à la définition de cette invention.

Il est en outre précisé que, lorsque, selon la définition de l'invention, l'objet de l'invention comporte "au moins une fonction donnée", le mode de mise en œuvre décrit peut comporter plusieurs de ces fonctions. Réciproquement, si le mode de réalisation de l'objet selon l'invention tel qu'illustré comporte plusieurs fonctions identiques et si, dans la description, il n'est pas spécifié que l'objet selon cette invention doit obligatoirement comporter un nombre particulier de ces fonctions, l'objet de l'invention pourra être défini comme comportant "au moins une" de ces fonctions.

Il est enfin précisé que lorsque, dans la présente description, une expression définit à elle seule, sans mention particulière spécifique la concernant, un ensemble de caractéristiques structurelles, ces caractéristiques peuvent être prises, pour la définition de l'objet de la protection demandée, quand cela est techniquement possible, soit séparément, soit en combinaison totale et/ou partielle.

Il est de même précisé que, dans la présente description, si l'adverbe "sensiblement" est associé à un qualificatif d'un moyen donné, ce qualificatif doit être compris au sens strict ou approché.

La figure 1 représente, sous la forme de blocs, les différentes phases de mise en œuvre du procédé selon l'invention pour obtenir un corps Cp devant avoir une forme donnée à partir d'un fil ou analogue qui, dans ce cas d'application, est un ressort en hélice ou pseudo-hélice.

Le procédé consiste, dans une première phase Ph1, à réaliser une ébauche 10 du fil sous la forme d'un mélange de fibres 12, par exemple de verre ou analogue, et de résine polymérisable 14 non polymérisée liant entre elles ces fibres.

Il est souligné que la forme du fil est de préférence cylindrique, de révolution ou non, et que sa section transversale peut être de toute forme, bien que la forme circulaire soit préférable notamment pour la réalisation de ressorts hélicoïdaux.

Une telle réalisation est bien connue en elle-même et ne sera pas décrite plus en détail, dans l'unique souci de simplifier la présente description.

Dans une deuxième phase Ph2, le procédé consiste à translater l'ébauche 10 suivant une première direction donnée 100 et, pendant le mouvement de translation Tr de l'ébauche 10, à réaliser une gaine 20 autour de cette ébauche avec un matériau de gainage en fusion 22 dont la température de fusion est inférieure à la température de transition vitreuse de la résine 14 et à la température de ramollissement des fibres 12.

Au sens de la présente description, par l'expression "état en fusion", il doit être compris un état en phase fluide et/ou pâteuse.

Ce matériau est un matériau défini au sens de la présente invention comme un eutectique choisi parmi les mélanges suivants: étain-bismuth, plomb-étain-bismuth.

Puis, dans une troisième phase Ph3, tout en continuant la translation de l'ensemble comprenant l'ébauche 10 et la gaine 20 en fusion obtenu lors de la deuxième phase, le procédé consiste simultanément à refroidir Ph3-1 l'ensemble défini ci-dessus pour obtenir une solidification relative de la gaine 20, et à mettre en forme Ph3-2 cet ensemble pour obtenir la forme donnée.

Dans une quatrième phase Ph4 faisant suite à la troisième, le procédé consiste à maintenir, durant un temps déterminé, l'ensemble "ébauche-gaine" à une température dite "de gélification" pour obtenir la polymérisation qui peut être totale ou presque totale de la résine 14 contenue dans l'ébauche, selon la nature de la résine utilisée, car la cinétique de polymérisation est très différente d'une résine à l'autre.

Puis, dans une cinquième phase Ph5 consécutive à la quatrième, l'ensemble "ébauche-gaine" est porté à une température inférieure à la température de transition vitreuse de la résine 14 et de ramollissement des fibres 12, mais supérieure à la température de fusion du matériau de gainage, jusqu'à ce que la gaine 20 ait complètement fondue, la résine étant alors, en fin de cette cinquième phase, totalement polymérisée et post cuite si elle ne l'avait pas été dans les phases précédentes.

La mise en œuvre du procédé se termine, dans une sixième phase Ph6, par la récupération du corps Cp présentant la forme donnée pour, par exemple, lui faire subir des traitements d'usinage, d'adaptation à différents éléments, etc., selon la destination pour laquelle il est prévu.

Lorsque la gaine 20 est relativement solidifiée, en fin de mise en forme de celle-ci phase 3-2, et spécialement si on utilise des époxy à polymérisation très rapides, une mise en œuvre avantageuse du procédé consiste Ph7 à appliquer à l'ensemble "ébauche-gaine" une surchauffe à une température inférieure à la température de fusion de la gaine pour qu'elle conduise de la chaleur à la résine 14 de façon à effectuer la polymérisation de cette résine.

Cette surchauffe Ph7 est de façon avantageuse obtenue par l'effet Joule produit par le passage d'un courant électrique dans la gaine 20 qui, par conduction thermique, transmet la chaleur produite à la résine 14 de l'ébauche 10, ou par tout autre procédé tel que l'induction, les infrarouges.

La fusion de la gaine 20 en phase Ph5 peut être obtenue avec les mêmes moyens que ceux mis en œuvre lors de la phase Ph7 décrite ci-dessus.

A titre d'exemple, le procédé décrit ci-dessus peut être mis en oeuvre au moyen d'un système schématiquement illustré sur la figure 1 qui peut comporter, par exemple, une source de matériau eutectique en fusion 102, une buse d'injection en anneau 104 comportant une chambre annulaire 106, cette dernière comprenant une entrée d'alimentation reliée à la source de matériau eutectique en fusion et optionnellement une sortie d'injection 108 sensiblement centrale ouverte sur trois cent soixante degrés vers l'intérieur de l'anneau, cette sortie d'injection étant en outre sensiblement définie dans un plan 110 délimitant deux demi-espaces respectivement amont Eam et aval Eav.

Le système comporte aussi des moyens 112 pour positionner la buse d'injection 104 de façon que, lors de sa translation Tr, l'ébauche 10 se translate du demi-espace amont Eam vers le demi-espace aval Eav en passant dans la sortie d'injection 108 de la buse 104 de façon qu'il se produise une gaine 20 du matériau eutectique en fusion autour de l'ébauche 10.

Le système comporte ensuite Ph3 des moyens de refroidissement 120 de l'ensemble défini ci-avant, c'est-à-dire l'ensemble "ébauche 10 entourée de la gaine 20 en matériau eutectique fondu", qui permettent de suffisamment solidifier le matériau eutectique, ces moyens de refroidissement étant, comme illustré, situés dans le demi-espace aval Eav. Sont prévus Ph4 des moyens 130 pour chauffer l'ensemble après que la gaine ait été relativement solidifiée, par exemple un four ou une étuve.

Selon l'invention la résine utilisée est une résine thermodurcissable et les fibres 12 sont en au moins l'un des matériaux suivants : verre, carbone, aramide.

Comme mentionné ci-avant, le procédé selon l'invention trouve une application particulièrement avantageuse pour la réalisation de nombreux corps, notamment des éléments de châssis de véhicules automobiles, des éléments de suspension comme des triangles, des bielles et de façon encore plus avantageuse des ressorts en hélice ou pseudo-hélice.

Dans le cas de cette application, le procédé consiste, pendant la troisième phase Ph3 au cours de laquelle la gaine 20 est relativement solidifiée, à décaler, flèche De figure 1, l'ensemble "ébauche-gaine" par rapport à la première direction donnée 100 et à l'entraîner en rotation, flèche Ro figure 1, par rapport à cette première direction (Ph3-2).

De façon préférentielle, comme illustré sur les figures 2 et 3, le procédé pour décaler l'ensemble et l'entraîner en rotation, consiste tout d'abord à diriger l'ensemble sur un mandrin 200 soumis à un mouvement de translation Ft et de rotation Fr autour de son axe 211, les vitesses de translation Ft et de rotation Fr du mandrin 200 étant choisies pour obtenir un corps Cp consistant en un ressort bobiné selon une forme hélicoïdale ou pseudo hélicoïdale donnée.

La mise en œuvre du procédé selon l'invention pour obtenir un corps Cp devant avoir une forme donnée à partir d'un fil ou analogue est schématiquement décrite ci-dessous en référence aux figures annexées.

L'extrémité de l'ébauche 10 du fil commence à se translater Tr dans la buse 104 pour émerger entourée d'un début 20-1 de gaine 20 en matériau eutectique fondu qui, par son état de fusion, se colle sur la tête 201 du mandrin 200 ou y est pincée par un moyen de préhension comme, par exemple, le moyen connu des techniciens sous la dénomination de "sauterelle".

La tête du mandrin 201 est par exemple pilotée par un robot programmé ou analogue pour subir les deux mouvements de translation selon la flèche Ft et de rotation Fr autour de son axe 211.

Au fur et à mesure que l'ébauche 10 est recouverte de la gaine relativement solidifiée, du fait de la combinaison des mouvements de translation et de rotation imposés par le mandrin 200, l'ensemble "ébauche 10 - gaine 20" prend une forme en hélice comme illustré sur les figures 2 et 3.

Il est précisé que, en modulant la vitesse de translation et de rotation du mandrin 200, il est possible d'obtenir à volonté différentes formes, comme une forme pseudo-hélicoïdale visible sur les figures 2 et 3 (partie renflée au milieu de l'hélice).

Une telle réalisation n'était pas possible avec les techniques de moulage selon l'art antérieur rappelées au préambule de la présente description, sinon au prix de coûts de revient prohibitifs.

## Revendications

1. Procédé pour obtenir un corps (Cp) devant avoir une forme donnée à partir d'un fil ou analogue, **caractérisé par le fait qu'**il consiste :
• dans une première phase (Ph1), à réaliser une ébauche (10) du dit fil sous la forme d'un mélange de fibres (12) et de résine polymérisable (14), thermodurcissable, non polymérisée liant entre elles lesdites fibres, les fibres (12) étant en au moins l'un des matériaux suivants : verre, carbone, aramide,
• dans une deuxième phase (Ph2), à translater ladite ébauche (10) suivant une première direction donnée et, pendant le mouvement de translation (Tr) de l'ébauche (10), à réaliser une gaine (20) autour de ladite ébauche (10) avec un matériau de gainage en fusion (22) dont la température de fusion est inférieure à la température de transition vitreuse de la résine (14) et à la température de ramollissement des fibres (12), ledit matériau de gainage utilisé étant un matériau eutectique choisi parmi les mélanges suivants : étain-bismuth, plomb-étain-bismuth,
• dans une troisième phase (Ph3), tout en continuant la translation de l'ensemble comprenant l'ébauche (10) et la gaine (20) en fusion obtenu lors de la deuxième phase, simultanément :
* à refroidir ledit ensemble (Ph3-1) à l'aide de moyens de refroidissement (120) pour obtenir une solidification relative de la gaine (20), et
* à mettre en forme ledit ensemble (Ph3-2) pour obtenir ladite forme donnée,
• dans une quatrième phase (Ph4), à maintenir durant un temps déterminé ledit ensemble à une température dite « de gélification » pour polymériser la résine (14) contenue dans ladite ébauche,
• dans une cinquième phase (Ph5), à porter ledit ensemble à une température inférieure à la température de transition vitreuse de la résine (14) mais supérieure à la température de fusion du matériau de gainage, jusqu'à ce que la gaine ait complètement fondue, la résine étant alors, en fin de cette cinquième phase, totalement polymérisée et post cuite, et
• dans une sixième phase (Ph6), à récupérer ledit corps formé (Cp).

2. Procédé selon la revendication 1, **caractérisé par le fait que**, lorsque la gaine (20) est solidifiée lors de la troisième phase (Ph3), il consiste à appliquer au dit ensemble une surchauffe (Ph7) à une température inférieure à la température de fusion de la gaine pour qu'elle conduise de la chaleur à la résine de façon à polymériser ladite résine (14).

3. Procédé selon la revendication 2, **caractérisé par le fait que** la surchauffe (Ph7) du dit ensemble est obtenue par l'un des moyens suivant : passage d'un courant électrique dans la gaine (20), induction, infrarouges.

4. Procédé selon l'une des revendications précédentes, **caractérisé par le fait que**, ladite forme donnée qui doit être obtenue ayant la forme d'une hélice ou pseudo-hélice, il consiste, pendant la troisième phase (Ph3) au cours de laquelle est solidifiée ladite gaine (20), à décaler (De) ledit ensemble par rapport à ladite première direction donnée et à l'entraîner en rotation (Ro) par rapport à ladite première direction.

5. Procédé selon la revendication 4, **caractérisé par le fait que**, pour décaler et entraîner en rotation ledit ensemble, ce dernier est dirigé sur un mandrin soumis à un mouvement de translation et de rotation autour de son axe, les vitesses de translation et de rotation du mandrin étant choisies pour obtenir la forme donnée pour ledit corps (Cp).

## Patentansprüche

1. Verfahren zum Erhalten eines Körpers (Cp), der eine vorgegebene Form aus einem Draht oder dergleichen aufweisen muss, **dadurch gekennzeichnet, dass** es besteht aus:
• in einem ersten Schritt (Ph1) dem Herstellen eines Rohlings (10) des Drahtes in der Form einer Mischung aus Fasern (12) und polymerisierbarem Harz (14), das wärmehärtbar ist, nicht-polymerisiert und die Fasern miteinander verbindet, und wobei die Fasern (12) aus zumindest einem der folgenden Materialien sind: Glas, Kohlenstoff, Aramid,
• in einem zweiten Schritt (Ph2) dem Verschieben des Rohlings (10) einer ersten vorgegebenen Richtung folgend und während der Bewegung der Verschiebung (Tr) des Rohlings (10) dem Herstellen einer Umhüllung (20) um den Rohling (10) mit einem geschmolzenen Umhüllungsmaterial (22), dessen Schmelztemperatur niedriger als die Glasübergangstemperatur des Harzes (14) und als die Erweichungstemperatur der Fasern (12) ist, wobei das verwendete Umhüllungsmaterial ein eutektisches Material ist, das aus den folgenden Mischungen ausgewählt ist: Zinn-Wismut, Blei-Zinn-Wismut,
• in einem dritten Schritt (Ph3) unter Fortsetzung der Verschiebung der Baugruppe, die den Rohling (10) und die geschmolzene Umhüllung (20) umfasst, die im zweiten Schritt erhalten wird, gleichzeitig:
❖ Kühlen der Baugruppe (Ph3-1) mit Hilfe von Kühlmitteln (120), um eine relative Verfestigung der Umhüllung (20) zu erhalten, und
❖ Formen der Baugruppe (Ph3-2), um die vorgegebene Form zu erhalten,
• in einem vierten Schritt (Ph4) dem Halten der Baugruppe bei einer als "Gelierung" bezeichneten Temperatur für eine bestimmte Zeit, um das in dem Rohling enthaltene Harz (14) zu polymerisieren,
• in einem fünften Schritt (Ph5) dem Bringen der Baugruppe auf eine Temperatur, die niedriger als die Glasübergangstemperatur des Harzes (14), aber höher als die Schmelztemperatur des Umhüllungsmaterials ist, bis die Umhüllung vollständig geschmolzen ist und das Harz am Ende dieses fünften Schrittes vollständig polymerisiert und nachgehärtet ist, und
• in einem sechsten Schritt (Ph6) dem Erhalten des gebildeten Körpers (Cp).

2. Verfahren nach Anspruch 1, **dadurch gekennzeichnet, dass** es, während die Umhüllung (20) in dem dritten Schritt (Ph3) verfestigt wird, aus dem Aufbringen einer Überhitzung (Ph7) auf die Baugruppe bei einer Temperatur besteht, die niedriger als die Schmelztemperatur der Umhüllung ist, damit sie die Wärme an das Harz weiterleitet, um das Harz (14) zu polymerisieren.

3. Verfahren nach Anspruch 2, **dadurch gekennzeichnet, dass** die Überhitzung (Ph7) der Baugruppe durch eines der folgenden Mittel erhalten wird: Leiten eines elektrischen Stroms in die Umhüllung (20), Induktion, Infrarotstrahlen.

4. Verfahren nach einem der vorhergehenden Ansprüche, **dadurch gekennzeichnet, dass** die vorgegebene Form, die erhalten werden muss, die Form einer Spirale oder Pseudospirale aufweist und es während des dritten Schrittes (Ph3), während dessen die Umhüllung (20) verfestigt wird, aus dem Versetzen (De) der Baugruppe in Bezug auf die erste vorgegebene Richtung und aus dem Drehen (Ro) in Bezug auf die erste Richtung besteht.

5. Verfahren nach Anspruch 4, **dadurch gekennzeichnet, dass**, um die Baugruppe zu versetzen und zu drehen, diese auf einem Dorn geführt wird, der einer Bewegung der Verschiebung und der Drehung um seine Achse unterliegt, wobei die Geschwindigkeiten der Verschiebung und der Drehung des Dorns ausgewählt sind, um die vorgegebene Form für den Körper (Cp) zu erhalten.

## Claims

1. A method for obtaining a body (Cp) which must have a given shape, starting with a yarn or the like, **characterized by** the fact that it consists:
• in a first phase (Ph1), of producing a preform (10) of said yarn in the form of a mixture of fibers (12) and of non-polymerized thermosetting polymerizable resin (14), linking together said fibers, the fibers (12) being of at least one of the following materials: glass, carbon aramid,
• in a second phase (Ph2), of translating said preform (10) in a first given direction and, during the translation movement (Tr) of the preform (10), producing a sheath (20) around said preform (10) with a molten sheathing material (22) the melting temperature of which is less than the glass transition temperature of the resin (14) and to the softening temperature of the fibers (12), said sheathing material being a eutectic material selected among the following mixtures: tin-bismuth, lead-tin-bismuth,
• in a third phase (Ph3), while continuing the translation of the assembly comprising the preform (10) and the molten sheath (20) obtained during the second phase, simultaneously:
∗ cooling said assembly (Ph3-1) using cooling means (120) to obtain a relative solidification of the sheath (20), and
∗ shaping said assembly (Ph3-2) to obtain said given shape,
• in a fourth phase (Ph4), of maintaining said assembly for a predetermined time at a temperature called the "gelation temperature" to polymerize the resin (14) contained in said preform,
• in a fifth phase (Ph5), of bringing said assembly to a temperature less than the glass transition temperature of the resin (14) but greater than the melting temperature of the sheathing material, until the sheathing has melted completely, the resin then being, at the end of this fifth phase, completely polymerized and post-cured, and
• in a sixth phase (Ph6), of recovering said formed body (Cp).

2. The method according to claim 1, **characterized by** the fact that, when the sheath (20) is solidified during the third phase (Ph3), it consists of applying superheating (Ph7) to said assembly at a temperature below the melting temperature of the sheath so that it conducts heat to the resin so as to polymerize said resin (14).

3. The method according to claim 2, **characterized by** the fact that superheating (Ph7) of said assembly is obtained by one of the following means: passing an electrical current through the sheath (20), induction, infrared.

4. The method according to one of the preceding claims, **characterized by** the fact that, said given shape which must be obtained having the shape of a helix or pseudo-helix, it consists, during the third phase (Ph3) during which said sheath (20) is solidified, in shifting (De) said assemble relative to said first given direction and driving it in rotation (Ro) relative to said first direction.

5. The method according to claim 4, **characterized by** the fact that, in order to shift and drive in rotation said assembly, the latter is directed on a mandrel subjected to a movement of translation and of rotation around its axis, the speeds of translation and of rotation of the mandrel being selected to obtain the given shape for said body (Cp).
